Europäisches Patentamt

(19) European Patent Office

Office européen des brevets

(11) Veröffentlichungsnummer: **0 226 803**
A2

(12) **EUROPÄISCHE PATENTANMELDUNG**

(21) Anmeldenummer: 86115771.7

(22) Anmeldetag: 13.11.86

(51) Int. Cl.⁴: **B 60 T 8/32**
**B 60 T 8/18**

(30) Priorität: 21.12.85 DE 3545676

(43) Veröffentlichungstag der Anmeldung:
01.07.87 Patentblatt 87/27

(84) Benannte Vertragsstaaten:
DE FR GB SE

(71) Anmelder: ROBERT BOSCH GMBH
Postfach 50
D-7000 Stuttgart 1(DE)

(72) Erfinder: Janetzke, Helmut, Dipl.-Ing.
Liegnitzerstrasse 4
D-7141 Schwieberdingen(DE)

(72) Erfinder: Schulz, Alfred, Dipl.-Ing.
Leinfelderweg 7
D-7141 Oberriexingen(DE)

(72) Erfinder: Volkert, Matthias, Dipl.-Ing.
Friedrichstrasse 20
D-7143 Vaihingen/Enz(DE)

(54) Druckmittelbetätigte, insbesondere pneumatische, Bremsanlage für Fahrzeuge.

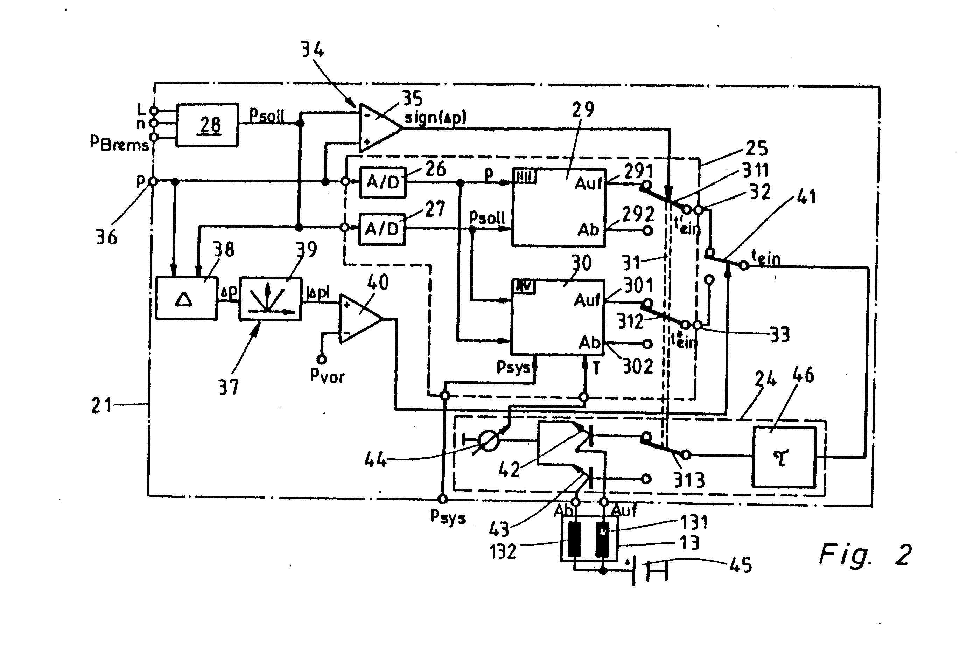

(57) Eine Bremsanlage für Fahrzeuge weist mindestens ein, jeweils einem Bremszylinder zugeordnetes elektromagnetisches Drucksteuerventil (13) mit drei Schaltstellungen zum Druckaufbau, Druckabbau und Druckhalten und eine Regelelektronik (21) zum Schalten des Drucksteuerventils (13) in Abhängigkeit von Bremsdruckparametern, wie Solldruck, Istdruck, Raddrehzahl u.dgl., auf. Zur Erzielung einer genauen Regelung mit einer minimalen Zahl von Schaltspielen des Drucksteuerventils (13) wird die Einschaltzeit für das Drucksteuerventil (13) mittels einer das Verhalten der Regelstrecke beschreibenden Druck-Zeit-Funktion ermittelt. Hierzu weist die Regelelektronik (21) eine Recheneinheit (25) auf, der Soll- und Istbremsdruck zugeführt werden und die mit Hilfe der abgespeicherten Druck-Zeit-Funktion die zum Ausregeln der Druckdifferenz zwischen Soll- und Istbremsdruck erforderliche Einschaltzeit des Drucksteuerventils (13) berechnet (Figur 2).

Fig. 1

**0226803**

R. 20356

4.12.1985 He

ROBERT BOSCH GMGH, 7000 Stuttgart 1

<u>Druckmittelbetätigte, insbesondere pneumatische,</u>
<u>Bremsanlage für Fahrzeuge</u>

Stand der Technik

Die Erfindung geht aus von einer druckmittelbetätigten, insbesondere pneumatischen, Bremsanlage für Fahrzeuge der im Oberbegriff des Anspruchs 1 definierten Gattung.

Bei einer bekannten hydraulischen Bremsanlage, auch ABS-Bremssystem genannt, ist jedem Radbremszylinder ein solches als 3/3-Wege-Magnetventil ausgebildetes Drucksteuerventil zugeordnet, das mittels in der Regelelektronik erzeugter Schaltsignale geschaltet wird. Mit Einleiten einer Bremsung werden die Magnetventile in ihre Druckaufbaustellung geschaltet, so daß sich der über das Bremspedal eingesteuerte Bremsdruck in den Bremszylindern aufbauen kann. Sensoren erfassen die Raddrehzahl und geben entsprechende elektrische Sensorsignale an die Regelelektronik. Die Regelelektronik verarbeitet diese Sensorsignale zu Schaltsignalen, die die Magnetventile in die Halte-, Druckabbau- oder Druckaufbaustellung umschalten. Ein solches Bremssystem hat sich für hydraulische Bremsen als vorteilhaft erwiesen. Bei pneumatischen Bremsen hingegen entsteht durch die sehr hohe Zahl von Schaltspielen der Magnetventile ein relativ hoher Luftverbrauch. Auch ist das bei Druckabbau entstehende Geräusch durch die Häufigkeit der Schaltspiele sehr lästig.

Vorteile der Erfindung

Die erfindungsgemäße Bremsanlage mit den kennzeichnenden Merkmalen des Anspruchs 1 hat den Vorteil, daß der Bremsdruck kontinuierlich in Abhängigkeit von der auszuregelnden Druckänderung vorgegeben wird. Das Drucksteuerventil wird nur so lange in seine Druckauf- oder -abbaustellung umgeschaltet, wie dies aufgrund der Ventilcharakteristik zur Einstellung des gewünschten Bremsdruckes erforderlich ist. Dadurch gelingt es, bereits mit dem ersten Schaltspiel des Drucksteuerventils den Bremsdruck auf einen sehr nahe dem Sollwert liegenden Druckwert einzustellen, so daß zur exakten Regelung des Bremsdrucks eine minimale Zahl von Schaltspielen erforderlich ist. Durch die minimale Zahl an Schaltspielen ist bei pneumatischen Bremsanlagen der Luftverbrauch gering. Die Bremsanlage bietet damit auch beste Voraussetzungen für die Anwendung eines kontinuierlichen ABS-Regelverfahrens, bei welchem die Sensoren für die Raddrehzahl den vorgegebenen Sollbremsdruck entsprechend korrigieren.

Durch die in den weiteren Ansprüchen aufgeführten Maßnahmen sind vorteilhafte Weiterbildungen und Verbesserungen der im Anspruch 1 angegebenen Bremsanlage möglich.

0226803
R. 20356

Eine vorteilhafte Ausführungsform der Erfindung ergibt sich aus Anspruch 2. Zur Aufnahme der Druck-Zeit-Funktion wird das Drucksteuerventil, das eingangsseitig mit dem Systemdruck $p_{Sys}$ der Bremsanlage beaufschlagt ist, zum Zeitpunkt t = 0 in die Druckaufbaustellung und nach Erreichen des Systemdrucks $p_{Sys}$ im Radbremszylinder in die Druckabbaustellung umgeschaltet. Der zeitliche Druckverlauf wird in einem Speicher der Recheneinheit, beispielsweise als digitale Stützwerte, abgespeichert.

Eine vorteilhafte Ausführungsform der Erfindung ergibt sich auch aus Anspruch 3. Durch diese Maßnahmen wird neben der Grobregelung, welche das statische Verhalten der Regelstrecke, bestehend aus Drucksteuerventil, Radbremszylinder und beide verbindenden Druckleitungen, einbezieht in einer Feinregelung, welche die Dynamik des Drucksteuerventils berücksichtigt, die Einschaltzeit ermittelt. Diese Einschaltzeit ist nicht nur von der Druckdifferenz zwischen dem Sollbremsdruck und dem Istbremsdruck abhängig sondern auch von der Temperatur der Magnetspule des Drucksteuerventils, von dem Druckniveau im Radbremszylinder und von dem Druckniveau im Vorratsbehälter, also von dem Systemdruck $p_{Sys}$ abhängig. Alle diese Größen werden mittels Sensoren erfaßt und in der Recheneinheit der Steuerelektronik zur Ermittlung der Einstell- oder Einschaltzeit $t_{ein}$ verarbeitet.

Eine vorteilhafte Ausführungsform der Erfindung ergibt sich dabei aus Anspruch 4. Durch die Auswahlvorrichtung werden die auftretenden Druckdifferenzen zwischen Sollbremsdruck und Istbremsdruck in wenigstens zwei Kategorien aufgeteilt, und zwar in solche, die oberhalb des Vorgabewertes liegen und eine lange Einschaltzeit des Drucksteuerventils erfordern, und in solche die unterhalb des Vorgabewertes liegen und eine nur sehr kurze Einschaltzeit des Drucksteuerventils bedingen. Damit wird der Tatsache Rechnung getragen, daß die Dynamik des Drucksteuerventils bei größeren Einschaltzeiten $t_{ein}$ vernachlässigbar ist, bei kurzen Einschaltzeiten aber eine wesentliche Rolle spielt.

Eine vorteilhafte Ausführungsform der Erfindung ergibt auch aus Anspruch 5. Durch den Vorzeichendetektor wird festgestellt, ob im Radbremszylinder ein Bremsdruck auf- oder abgebaut werden muß. Da für Druckaufbau und Druckabbau unterschiedliche Kennlinien und Berechnungsformeln zu berücksichtigen sind, kann mit dem Ausgangssignal des Vorzeichendetektors eine Auswahl der zur Berechnung der Einschaltzeit heranzuziehenden Kennlinie bzw. Berechnungsformel getroffen werden.

Zeichnung

Die Erfindung ist anhand eines in der Zeichnung dargestellten Ausführungsbeispiels in der nachfolgenden Beschreibung näher erläutert. Es zeigen:

Fig. 1 eine schematische Darstellung einer pneumatischen Bremsanlage für ein Kraftfahrzeug,

Fig. 2 ein Blockschaltbild einer Regelelektronik der Bremsanlage in Fig. 1,

Fig. 3 ein Diagramm der in einer Recheneinheit der Regelelektronik in Fig. 2 abgespeicherten Druck-Zeit-Funktionen.

## Beschreibung des Ausführungsbeispiels

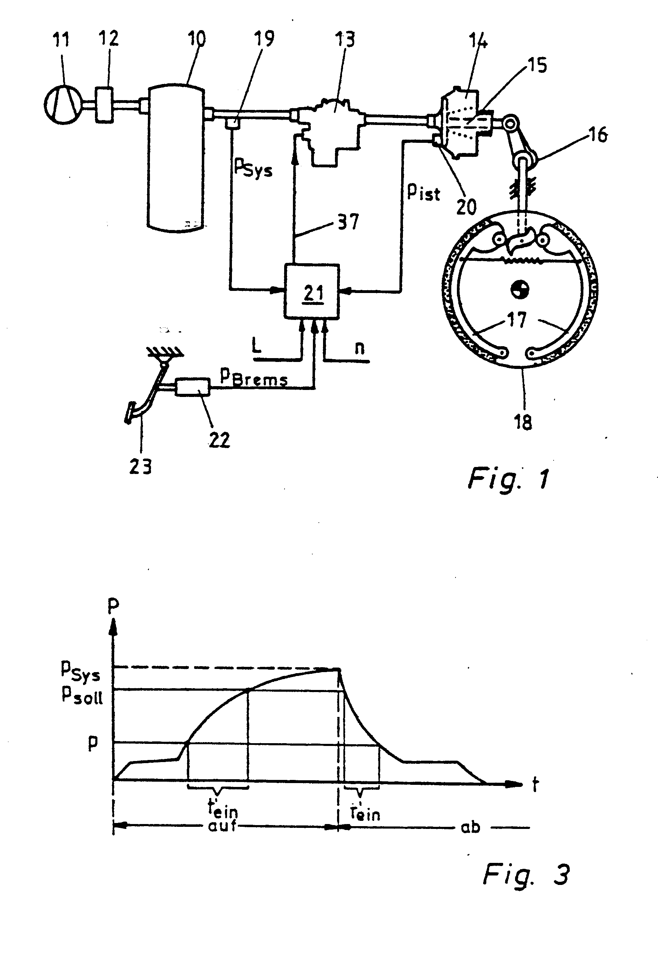

Die in Fig. 1 schematisch dargestellte pneumatische Bremsanlage eines Kraftfahrzeugs weist einen Vorratsbehälter 10 auf, der von einem Luftkompressor 11 über ein Druckregelventil 12 mit Vorratsluft auf einen Systemdruck $p_{Sys}$ aufgeladen wird. An dem Vorratsbehälter 10 ist über ein Drucksteuerventil 13, das hier als 3/3-Wege-Magnetventil ausgebildet ist, ein Bremszylinder 14 angeschlossen, dessen Bremskolben 15 über ein mechanisches Bremsgestänge 16 auf die Bremsbacken 17 eines Rades des Kraftfahrzeuges wirkt. Bei Einsteuerung von Bremsdruck in den Bremszylinder 14 wird der Bremskolben 15 verschoben. Dadurch werden über das Bremsgestänge 16 die Bremsbacken 17 an die Bremstrommel 18 des Rades angepreßt.

In der skizzierten Bremsanlage ist der Übersicht halber nur eine einzige Bremstrommel 18 mit Bremsbacken 17 dargestellt. In bekannter Weise ist jedem Rad ein Bremszylinder und Drucksteuerventil zugeordnet, so daß an dem Vorratsbehälter 10 insgesamt vier Bremsstränge mit jeweils einem Drucksteuerventil 13 und einem Bremszylinder 14 angeschlossen sind. Mitunter sind auch die Bremszylinder der Hinterräder an einem einzigen Drucksteuerventil angeschlossen. In diesem Fall sind drei Bremsstränge vorhanden.

Am Ausgang des Vorratsbehälters 10 ist ein Drucksensor 19, der den Systemdruck $p_{Sys}$ erfaßt, und an jedem Bremszylinder 14 ist ein Drucksensor 20, der den Istbremsdruck im Bremszylinder 14 erfaßt, angeordnet. Die Drucksensoren 19,20 wandeln die Druck-Eingangssignale in entsprechende el. Ausgangssignale um, die einer Regelelektronik 21 zugeführt werden. Mit der Regelelektronik 21 ist weiterhin der Ausgang eines Druckwandlers 22 verbunden, der mit einem Bremspedal 23 der Betriebsbremse gekoppelt ist und die Stellung des Bremspedals 23 in ein elektrisches Bremsdrucksignal $p_{Brems}$ umwandelt. Weiterhin können der Regelelektronik 21 weitere beim Bremsvorgang zu berücksichtigende, die Dynamik des Fahrzeugs betreffende Meßsignale, wie Raddrehzahl n oder die Achslast L zugeführt werden. Diese Meßsignale werden mit entsprechenden Sensoren erfaßt und im allgemeinen als Bremsparameter bezeichnet.

Das Drucksteuerventil 13 ist an sich bekannt und wird als sog. ABS-Ventil bezeichnet. Es ist einerseits an dem Vorratsbehälter 10 und andererseits an dem Bremszylinder 14 angeschlossen und weist zusätzlich einen Entlüftungsausgang auf. Von den drei Schaltstellungen dient die mittlere zum Halten des in den Bremszylinder 14 eingesteuerten Bremsdruckes, wozu in dieser Schaltstellung der Ventileinlaß und der Ventilauslaß hermetisch abgeschlossen sind. In der einen äußeren Schaltstellung des Drucksteuerventils 13 wird der Bremszylinder 14 mit dem Vorratsbehälter 10 verbunden, so daß der Druck im Bremszylinder 14 maximal bis auf Systemdruck $p_{Sys}$ aufgebaut werden kann, und in der anderen äußeren Schaltstellung wird der Bremszylinder 14 bei Abschluß des Ventileingangs mit dem Entlüftungsausgang verbunden, so daß in dieser Schaltstellung der Bremsdruck im Bremszylinder 14 bis zu dessen vollständigen Entlüftung abgebaut werden kann.

Zur Umschaltung des Drucksteuerventils 13 wird jeweils eine der Magnetspulen 131,132 des Drucksteuerventils 13 von der Regelelektronik 21 mit Erregerstrom versorgt. Hierzu weist die Regelelektronik 21 (Fig.2) einen Schaltsignalgenerator 24 auf, der für die Dauer einer vorbestimmten Einstell- oder Einschaltzeit $t_{ein}$ an eine der beiden Magnetspulen 131,132 des Drucksteuerventils 13 ein Schaltsignal legt, je nachdem ob das Drucksteuerventil 13 aus seiner Grundstellung "Druck halten" in seine Druckaufbau- oder Druckabbaustellung umgeschaltet werden soll. Die Einschaltzeit $t_{ein}$ wird von einer Recheneinheit 25 vorgegeben, welcher über einen ersten Analog-Digital-Wandler (A/D-Wandler) 26 das von dem Drucksensor 20 gelieferte, für den Istbremsdruck im Bremszylinder 14 repräsentative elektrische Istdrucksignal p und über einen zweiten Analog-Digital-Wandler 27 ein für den einzusteuernden Sollbremsdruck repräsentatives elektrisches Solldrucksignal $p_{soll}$ zugeführt wird. Das Solldrucksignal $p_{soll}$ wird von einer Sollbremsdruck-Vorgabevorrichtung 28 in Abhängigkeit von den elektrischen Bremssignalen $p_{Brems}$, n und L generiert, die - wie erwähnt - ein Maß für die Stellung des Bremspedals 23, für die Raddrehzahl und für die Achslast darstellen.

Die Recheneinheit 25 weist einen Speicher 29, ein Rechenwerk 30 und einen Umschalter 31 mit Umschaltkontakten 311 und 312 auf. In dem Speicher 29 ist eine erste Druck-Zeitfunktion für den Druckaufbau und eine zweite Druck-Zeitfunktion für den Druckabbau in Form von digitalen Stützwerten abgespeichert. Die beiden Druck-Zeitfunktionen geben jeweils den zeitlichen Druckverlauf in der aus Drucksteuerventil 13, Bremszylinder 14 und diese verbindenden Bremsleitung gebildeten Regelstrecke bei voll erregtem Drucksteuerventil 13 wieder. Diese Druck-Zeitfunktionen sind in Fig. 3 für Druckaufbau "auf" und Druckabbau "ab" dargestellt. Für jede an dem Eingang des Speichers 29 anliegende Paarung von Momentanwerten der Ist- und Solldrucksignale p, $p_{soll}$ liegt entsprechend der im Speicher 29 abgespeicherten Druck-Zeitfunktionen an den beiden Ausgängen des Speichers 291, 292 jeweils eine für Druckaufbau und für Druckabbau geltende Einschaltzeit $t'_{ein}$ an. Dies ist im Diagramm der Fig. 3 veranschaulicht. Die beiden Druck-Zeitfunktionen werden in einer Lernphase von der Recheneinheit 25 selbsttätig aufgenommen und abgespeichert. Dazu wird das Drucksteuerventil 13, das eingangsseitig mit dem Systemdruck $p_{Sys}$ des Vorratsbehälters 10 beaufschlagt ist, zum Zeitpunkt t = 0 in die Druckaufbaustellung und nach Erreichen des Systemdrucks $p_{Sys}$ im Bremszylinder 14 in die Druckabbaustellung umgeschaltet. Der zeitliche Druckverlauf wird in bestimmten Zeitintervallen abgetastet und die Abtastwerte als Stützwerte in dem Speicher in Zuordnung zu der Abtastzeit abgespeichert.

Das Rechenwerk 30 berechnet ebenfalls eine Einschaltzeit $t^*_{ein}$, welche für kurze Einschaltzeiten gültig ist und die Dynamik des Drucksteuerventils 13 berücksichtigt. Diese Einschaltzeit $t^*_{ein}$ wird für den Druckaufbau nach der Berechnungsformel:

$$t^*_{ein} = c_p(p) \cdot (p-p_{soll}) + c_T(p) \cdot T + c_s \cdot p_{Sys} + c_o(p)$$

und für den Druckabbau nach der Berechnungsformel:

$$t^*_{ein} = \dot{c}'_p(p) \cdot (p-p_{soll}) + c'(p) \cdot T + c'_s \cdot p_{Sys} + c'_o(p)$$

berechnet, wobei T die Temperatur der Magnetspule des Drucksteuerventils 13 ist. Die Faktoren $c_p$, $c'_p$, $c_T$, $c'_T$, $c_o$, $c'_o$ sind vom Druckniveau im Bremszylinder 14 abhängig, was durch das in Klammern gesetzte p symbolisiert ist. Zur Durchführung der entsprechenden Rechenoperationen sind dem Rechenwerk 30 das Istdrucksignal p, das Solldrucksignal $p_{soll}$, das von dem Drucksensor 19 ausgegebene elektrische Drucksignal $p_{Sys}$ und ein der Temperatur der Magnetspulen 131,132 des Drucksteuerventils 13 entsprechendes elektrisches Signal T zugeführt. Die Faktoren c (p) lassen sich aus im Rechenwerk 30 abgespeicherten Stützwerten ggf. mit Hilfe einer Interpolation bestimmen. An den Ausgängen 301 und 302 des Rechenwerks 30 liegt für jede Paarung der an den Eingängen des Rechenwerks 30 liegenden Momentanwerte von Istdrucksignal p und Solldrucksignal $p_{soll}$ eine für Druckaufbau bzw. für Druckabbau geltende Einschaltzeit $t^{*}_{ein}$ an.

Der Umschalter 31 verbindet je nach Schaltstellung die Ausgänge 291,292 des Speichers 29 und die Ausgänge 301 und 302 des Rechenwerks 30 mit je einem Ausgang 32,33 der Recheneinheit 25, so daß an dem Ausgang 32 entweder die für Druckaufbau oder die für Druckabbau gültige statische Einschaltzeit $t^{'}_{ein}$ und an dem Ausgang 33 die entweder für Druckaufbau oder Druckabbau geltende dynamische Einschaltzeit $t^{*}_{ein}$ anliegt. Der Umschalter 31 wird von einem Vorzeichendetektor 34 gesteuert, der das Vorzeichen der Differenz zwischen den Momentanwerten von Ist- und Solldrucksignal $p, p_{soll}$ erfaßt und je nach Vorzeichen die Umschaltkontakte 311 und 312 des Umschalters 31 in die eine oder andere Schaltstellung umschaltet. Der Vorzeichendetektor 34 ist als Komparator 35 ausgebildet, dessen invertierender Eingang mit dem Ausgang der Sollbremsdruck-Vorgabevorrichtung 28 und dessen nicht invertierender Eingang mit dem Istdruck-Signaleingang 36 der Regelelektronik 21 verbunden ist. Der Ausgang des Komparators 35 ist mit dem Steuereingang des Umschalters 31 verbunden, der selbstverständlich ein elektronischer Schalter und hier nur symbolisch als mechanischer
Schalter dargestellt ist. Ist der Momentanwert des
Solldrucksignals $p_{soll}$ größer als der Momentanwert
des Istdrucksignals p, so nehmen die Umschaltkontakte
311 und 312 die in Fig. 2 dargestellte Stellung ein.
Ist umgekehrt der Momentanwert des Solldrucksignals $p_{soll}$
kleiner als der des Istdrucksignals p, was charakteristisch für erforderlichen Druckabbau ist, so werden
die Schaltkontakte 311 und 312 des Umschalters 31 in
die andere Schaltstellung umgeschaltet.

Die Regelelektronik 21 weist noch eine Auswahlvorrichtung 37 auf, welche abhängig vom Betrag der Differenz
der Momentanwerte zwischen Istdrucksignal p und Solldrucksignal $p_{soll}$ die am Ausgang 32 der Recheneinheit
25 anstehende statische Einschaltzeit $t'_{ein}$ oder die
am Ausgang 33 der Recheneinheit 25 anstehende dynamische Einschaltzeit $t^*_{ein}$ dem Schaltsignalgenerator 24
zur Generierung eines Schaltsignals für das Drucksteuerventil 13 zuführt. Die Auswahlvorrichtung 37 besteht
aus einem Differenzbildner 38, einem dem Differenzbildner 38 nachgeschalteten Betragsbildner 39, einem an dem
Ausgang des Betragsbildners 39 angeschlossenen Komparator 40 und einem von dem Komparator 40 gesteuerten Auswahlschalter 41.    Der Differenzbildner 38 ist einerseits an dem Istdruck-Signaleingang 36 der Regelelektronik 21 und andererseits an dem Ausgang der Sollbremsdruck-Vorgabevorrichtung 28 angeschlossen. An den invertierenden Eingang des Komparators 40 ist ein Druckvorgabewert $p_{vor}$ gelegt, der z.B. zwischen 20 mbar und
200 mbar liegt. Der Ausgang des Komparators 40 ist mit
dem Steuereingang des elektronischen Auswahlschalters 41
verbunden, der seinerseits je nach Ansteuerung den Eingang 32 oder den Eingang 33 der Recheneinheit 25 mit dem Eingang des Schaltsignalgenerators 24 verbindet. Je nachdem, ob der Betrag der Differenz zwischen den Momentanwerten von Solldrucksignal $p_{soll}$ und Istdrucksignal p größer oder kleiner ist als der Vorgabewert $p_{vor}$ wird als Einschaltzeit $t_{ein}$ die statische Einschaltzeit $t'_{ein}$ am Ausgang 32 der Recheneinheit 25 oder die dynamische Einschaltzeit $t^*_{ein}$ am Ausgang 33 der Recheneinheit 25 zur Bestimmung der Einschaltdauer des Drucksteuerventils 13 herangezogen.

Der Schaltsignalgenerator 24 besteht im Ausführungsbeispiel der Fig. 2 aus zwei npn-Transistoren 42 und 43, deren Emitter miteinander verbunden und über einen Strommesser 44 an Masse angeschlossen sind. Die beiden Kollektoren der Transistoren 42,43 sind über jeweils eine der beiden Magnetspulen 131 bzw. 132 des Drucksteuerventils 13 mit dem Pluspol einer Gleichspannungsquelle 45 verbunden. Die Steuereingänge oder Basen der als Leistungstransistoren ausgebildeten Transistoren 42, 43 sind über einen Umschaltkontakt 313 mit einem Zeitsteuerglied 46 verbunden, das für die Dauer des an seinen Eingang gelangenden Digitalwertes der Einschaltzeit $t_{ein}$ eine konstante Steuerspannung generiert, die je nach Stellung des Umschaltkontakts 313 den Transistor 42 oder 43 durchschaltet. Der Umschaltkontakt 313 ist Teil des Umschalters 31 und wird mit dessen beiden anderen Umschaltkontakten 311 und 312 synchron geschaltet. Da der Umschalter 31 von dem Vorzeichendetektor 35 in Abhängigkeit von der Differenz der Momentanwerte des Istdrucksignals p und des Solldrucksignals $p_{soll}$ umgeschaltet wird, wird über den Umschaltkontakt 313 auch die für Druckaufbau bzw. Druckabbau zuständige Magnetspule 131 bzw. 132 des Drucksteuerventils 13 angesteuert. Die Meßgröße des Strommessers 44 ist ein Maß für die Temperatur T der jeweils eingeschalteten Magnetspule 131 bzw.132 des Drucksteuerventils 13, da der durch die jeweilige Magnetspule 131 bzw. 132 fließende Strom proportional dem Widerstand der Magnetspule 131 bzw. 132 ist und dieser sich mit der Temperatur ändert. Die Meßgröße des Strommessers 44 wird - wie bereits erwähnt - dem Rechenwerk 30 zugeführt.

Die Wirkungsweise der vorstehend beschriebenen Bremsanlage ist wie folgt:

Aus der Bremspedalstellung und der Raddrehzahl und ggf. der Achslast generiert die Sollbremsdruck-Vorgabevorrichtung 28 ein Solldrucksignal $p_{soll}$. Vom Drucksensor 20 liegt ein dem im Bremszylinder 14 herrschenden Istbremsdruck proportionales Istdrucksignal p an dem Istdruck-Signaleingang 36 der Regelelektronik 21. Der Differenzbildner 38 bildet aus den Momentanwerten von Istdrucksignal p und Solldrucksignal $p_{soll}$ die Druckdifferenz $\Delta p$, aus welcher der Betragsbildner 39 den Betrag bildet. Ist der Betrag der Druckdifferenz $|\Delta p|$ größer als der Vorgabewert $p_{vor}$ so nimmt der Auswahlschalter 41 die in Fig. 2 gezeigte Stellung ein, in welcher der Ausgang 32 der Recheneinheit 25 mit dem Eingang des Zeitsteuergliedes 46 verbunden ist.

Der Vorzeichendetektor 35 vergleicht das Istdrucksignal p mit dem Solldrucksignal $p_{soll}$. Ist der Momentanwert des Solldrucksignals $p_{soll}$ größer als der des Istdrucksignals p so nehmen die Umschaltkontakte 311 und 312 die in Fig. 2 dargestellte Stellung ein. Mit den an dem Speicher 29 anliegenden Momentanwerten von Solldrucksignal $p_{soll}$ und Istdrucksignal p wird aus der für Druckaufbau gültigen Druck-Zeit-Funktion gemäß Fig. 3 die statische Einschaltzeit $t'_{ein}$ ermittelt und gelangt über den Ausgang 291 des Speichers 29, den Umschaltkon-

0226803
R. 20356

takt 311 und den Auswahlschalter 41 als Einschaltzeit $t_{ein}$ an das Zeitsteuerglied 46. Im Zeitsteuerglied 46 wird für die Dauer der Einschaltzeit $t_{ein}$ eine konstante Steuerspannung generiert, die über den Umschaltkontakt 313 an dem Transistor 42 liegt. Dieser steuert durch und versorgt die Magnetspule 131 für den Druckaufbau mit Erregerstrom. Das Drucksteuerventil 131 schaltet in seine Druckaufbaustellung um und im Bremszylinder 14 wird Bremsdruck eingesteuert.

Ist der vom Betragsbildner 39 ausgegebene Betrag der Druckdifferenz $|\Delta p|$ kleiner als der Vorgabewert $p_{vor}$, so steuert das Ausgangssignal des Vergleichers 40 den Auswahlschalter 41 in die andere Schaltstellung um. In dieser Schaltstellung ist der Ausgang 33 der Recheneinheit 25 mit dem Zeitsteuerglied 46 verbunden. Ist der Momentanwert des Solldrucksignals $p_{soll}$ nach wie vor größer als der des Istdrucksignals p so berechnet das Rechenwerk 30 mit den anliegenden Momentanwerten des Istdrucksignals p und Solldrucksignals $p_{soll}$ nach der für Druckaufbau geltenden Berechnungsformel die dynamische Einschaltzeit $t^{*}_{ein}$, die über den Ausgang 301 des Rechenwerks 30, den Umschaltkontakt 312 und den Auswahlschalter 41 als Einschaltzeit $t_{ein}$ an dem Zeitsteuerglied 46 liegt. In gleicher Weise wie beschrieben wird wiederum der Transistor 42 für die Dauer der Einschaltzeit $t_{ein}$ angesteuert.

Ist hingegen der Momentanwert des Solldrucksignals $p_{soll}$ kleiner als der des Istdrucksignals p, so schaltet der Vorzeichendetektor 35 den Umschalter 31 in die andere Schaltstellung um. Der Umschaltkontakt 311 verbindet den Ausgang 32 der Recheneinheit 25 mit dem Ausgang 292 des Speichers 29, der Umschaltkontakt 312 verbindet den Ausgang 33 der Recheneinheit 25 mit dem Ausgang 302 des

Rechenwerks 30 und der Umschaltkontakt 313 verbindet das Zeitsteuerglied 46 mit der Basis des Transistors 43. Verbindet der Auswahlschalter 41 nach wie vor den Ausgang 33 der Recheneinheit 25 mit dem Zeitsteuerglied 46, so wird nunmehr im Rechenwerk 30 mit dem anstehenden Momentanwerten von Istdrucksignal p und Solldrucksignal $p_{soll}$ die dynamische Einschaltzeit $t^*_{ein}$ nach der für den Druckabbau geltenden Berechnungsformel ermittelt. Diese dynamische Einschaltzeit $t^*_{ein}$ liegt über den Ausgang 302 des Rechenwerks 30, den Umschaltkontakt 312 und über den Auswahlschalter 41 als Einschaltzeit $t_{ein}$ an dem Zeitverzögerungsglied 46. Für die Dauer der Einschaltzeit $t_{ein}$ wird der Transistor 43 von dem Zeitverzögerungsglied 46 angesteuert, wodurch die für den Druckabbau zuständige Magnetspule 132 des Drucksteuerventils 13 an die Gleichspannungsquelle 45 angeschlossen wird. Das Drucksteuerventil 13 wird in seine Schaltstellung für Druckabbau umgeschaltet und der in den Bremszylinder 14 eingesteuerte Bremsdruck wird reduziert.

Die Erfindung ist nicht auf das vorstehend beschriebene Ausführungsbeispiel einer pneumatischen Bremsanlage beschränkt. So kann als Druckmittel anstelle von Druckluft auch eine Flüssigkeit, z.B. Hydrauliköl, Verwendung finden.

—.—.—.—.—.—

R. 20356
4.12.1985 He

ROBERT BOSCH GMBH, 7000 Stuttgart 1

Ansprüche

1. Druckmittelbetätigte, insbesondere pneumatische, Bremsanlage für Fahrzeuge, mit mindestens einem wenigstens einem Bremszylinder zugeordneten elektromagnetischen Drucksteuerventil, das drei Schaltstellungen zum Druckaufbau, Druckabbau und Druckhalten aufweist, mit einer Regelelektronik zum Schalten des Drucksteuerventils, die eine Vorrichtung zur Vorgabe eines von Bremsparametern, wie Bremspedalstellung, Radschlupf, Achslast od.dgl. abhängigen Sollbremsdruckes als elektrisches Solldrucksignal aufweist, und mit mindestens einem Drucksensor, der den in den Bremszylinder eingesteuerten Istbremsdruck erfaßt und der Regelelektronik als elektrisches Istdrucksignal zuführt, d a d u r c h   g e k e n n z e i c h n e t , daß die Regelelektronik (21) eine Recheneinheit (25) zur Berechnung einer Einschaltzeit ($t'_{ein}$) des Drucksteuerventils (13) und einen Schaltsignalgenerator (24) zur Generierung eines das Drucksteuerventil (13) für die Dauer der Einschaltzeit ($t_{ein}$) in dessen Druckaufbau- oder Druckabbaustellung umschaltenden Schaltsignals aufweist, daß in der Recheneinheit (25) eine erste Druck-Zeit-Funktion für den Druckaufbau und eine zweite Druck-Zeit-Funktion für den Druckabbau abgespeichert ist, wobei die Druck-Zeit-Funktionen jeweils dem zeitlichen Druckverlauf in der aus Drucksteuerventil (13), Bremszylinder (14) und diese verbindenden Bremsleitungen gebildeten Regelstrecke bei vollerregtem Drucksteuerventil (13) wiedergeben, daß der Recheneinheit (25) das elektrische Solldrucksignal ($p_{soll}$) und das elektrische Istdrucksignal (p) zugeführt sind und daß die Recheneinheit (25) aus den abgespeicherten Druck-Zeit-Funktionen mit den jeweils anstehenden Momentanwerten des Ist- und Solldrucksignals ($p, p_{soll}$) die Einschaltzeit ($t'_{ein}$) bestimmt.

2. Bremsanlage nach Anspruch 1, d a d u r c h   g e - k e n n z e i c h n e t,  daß die Druck-Zeit-Funktionen in einer Lernphase von der Recheneinheit (25) selbsttätig aufgenommen und abgespeichert werden.

3. Bremsanlage nach Anspruch 1 oder 2, d a d u r c h g e k e n n z e i c h n e t,  daß die Recheneinheit (25) ein Rechenwerk (30) zur Berechnung einer zweiten Einschaltzeit ($t^*_{ein}$) aufweist, daß dem Rechenwerk (30) das Ist- und Solldrucksignal ($p, p_{soll}$), ein der Temperatur des Drucksteuerventils (13) entsprechendes elektrisches Temperatursignal (T) und ein den Systemdruck der Bremsanlage repräsentierendes elektrisches Systemdrucksignal ($p_{Sys}$) zugeführt sind, daß das Rechenwerk (30) derart aufgebaut ist, daß es jeweils aus den Momentanwerten dieser Signale die zweite Einschaltzeit ($t^*_{ein}$) für Druckaufbau gemäß einer ersten Berechnungsformel:

$$t^*_{ein} = c_p(p) \cdot (p - p_{soll}) + c_T(p) \cdot T + c_s \cdot p_{Sys} + c_o(p)$$

und für Druckabbau gemäß einer zweiten Berechnungs-formel:

$$t^*_{ein} = c'_p(p) \cdot (p-p_{soll}) + c'(p) \cdot T + c'_s \cdot p_{Sys} + c'_o(p)$$

berechnet, wobei $c_p$, $c'_p$, $c_T$, $c'_T$, $c_o$, $c'_o$ vom Druck-niveau im Bremszylinder (14) bei Druckaufbau und bei Druckabbau abhängige Faktoren sind, und daß die Regelelektronik (21) eine Auswahlvorrichtung (37) aufweist, welche abhängig vom Betrag der Differenz der Momentanwerte von Ist- und Solldrucksignal (p, $p_{soll}$) die erste oder zweite Einschaltzeit ($t'_{ein}$, $t^*_{ein}$) dem Schaltsignalgenerator (24) zur Generierung des Schaltsignals zuführt.

4. Bremsanlage nach Anspruch 3, d a d u r c h  g e - k e n n z e i c h n e t, daß die Auswahlvorrich-tung (37) einen Differenzbildner (38), dem das Ist- und Solldrucksignal (p, $p_{soll}$) zugeführt sind, einen dem Differenzbildner (38) nachgeschalteten Betragsbildner (39), einen dem Betragsbildner (39) nachgeschalteten Vergleicher (40) mit Vorgabewert ($p_{vor}$) und einen Auswahlschalter (41) aufweist, der von dem Vergleicher (40) derart gesteuert ist, daß er bei einem über dem Vorgabewert ($p_{vor}$) liegenden Ausgangs-signal des Betragbildners (39) die erste Einschalt-zeit ($t'_{ein}$) und bei einem unter dem Vorgabewert ($p_{vor}$) liegenden Ausgangssignal des Betragsbildners (39) die zweite Einschaltzeit ($t^*_{ein}$) an den Eingang des Schaltsignalgenerators (24) legt.

5. Brensanlage nach einem der Ansprüche 1 - 4, d a - d u r c h  g e k e n n z e i c h n e t, daß die Regelelektronik (21) einen Vorzeichendetektor (35) aufweist, der das Vorzeichen der Differenz der Momen-

tanwerte von Ist- und Solldrucksignal ($p, p_{soll}$) erfaßt und an die Recheneinheit (25) ein Druckaufbau oder Druckabbau charakterisierendes Kennsignal legt, und daß die Recheneinheit (25) entsprechend dem Kennsignal die erste bzw. die zweite Einschaltzeit ($t'_{ein}$ bzw. $t^*_{ein}$) anhand der jeweils für Druckaufbau und Druckabbau geltenden ersten oder zweiten Druck-Zeit-Funktion bzw. ersten oder zweiten Berechnungsformel bestimmt.

6. Bremsanlage nach einem der Ansprüche 3 - 5, d a - d u r c h   g e k e n n z e i c h n e t, daß zur Erfassung des Betriebsdruckes ($p_{Sys}$) in der Eingangsleitung des Drucksteuerventils (13) ein Drucksensor (19) angeordnet ist, dessen elektrisches Ausgangssignal der Steuerelektronik (21) zugeführt ist.

7. Bremsanlage nach einem der Ansprüche 3 - 6, d a - d u r c h   g e k e n n z e i c h n e t, daß in dem Erregerstromkreis des Drucksteuerventils (13) ein Strommesser (44) zum mittelbaren Messen der Temperatur (T) des Drucksteuerventils (13) eingeschaltet ist.

8. Bremsanlage nach einem der Ansprüche 1 - 7, d a - d u r c h   g e k e n n z e i c h n e t, daß der Vorgabewert ($p_{vor}$) gleich oder kleiner 200 mbar ist.

-.-.-.-.-.-.-.-.-

0226803

Fig. 1

Fig. 3

Fig. 2